# EUROPEAN PATENT APPLICATION

(11) **EP 1 237 303 A2**
(43) Date of publication of application: **04.09.2002**
(21) Application number: 02290347.0
(22) Date of filing: 13.02.2002
(51) Int. Cl.: H04B 10/10, H04B 7/00

(54) **Hybrid through-air telecommunication system protected against outages**

(30) Priority: 01.03.2001 IT MI010414
(71) Applicant: ALCATEL, 75008 Paris (FR)
(72) Inventor: Verbana, Gianfranco, 20059 Vimercate (Milano) (IT); Garofoli, Primo, 20133 Milano (IT)
(74) Representative: Colombo, Stefano Paolo

(57) **Abstract**

A hybrid through-air telecommunication system of a radio/optical type is described which significantly reduces the annual unavailability caused by weather events and/or faults. The hybrid optical and radio system further permits, given an annual availability value, of significantly increasing the maximum link distance if compared with the full radio or full optic systems. The changeover in reception occurs on the basis of the power values of the received signals.

## Description

The present invention relates to the through-air wireless communication field. In particular it concerns a hybrid telecommunication system that combines a conventional radio transmission system with an optical transmission system and is able to significantly reduce the unavailability of the link.

In every telecommunication system, the link availability is a basic parameter. Any cause of information traffic interrupt results in an outage reflecting upon the service provider that may suffer a loss of business in terms of both network occupancy time and image. Therefore, in a telecommunication free market, the quality of service becomes essential.

In the so-called hard-wired telecommunication systems (wherein the transmission of signals occurs over optical fiber or electrical cables) there is only one outage cause and it is related to the equipment and line reliability.

The countermeasures to eliminate this type of outage are based, on the other hand, upon the use of high quality (hence more reliable) equipments and cables and, on the other hand, upon two substantially equal parallel-connected systems (the equipments and/or the lines are duplicated).

Under normal operating conditions, traffic transits over the "main channel" whereas the other channel, termed "spare" channel, remains in standby, namely available in the event that a failure occurs: the spare system goes into working in case of failure of the main one. Neglecting the very short (on the order of milliseconds) times due to the switching, an overall availability of 100%, computed on a yearly time, between main channel and spare channel is obtained.

In the wireless systems there is another type of outage that is strictly connected with the unavoidable anomalies in the preparation through the atmosphere which in turn are dependent on weather events.

Specifically, in extremely high frequency radio systems (EHF links), namely frequencies between 30 and 300 GHz, the rain is the most relevant outage source.

The International Telecommunication Union (ITU) has formulated procedures for the computation of attenuation due to rain that is expressed as any time percentage (q) comprised between 0.001% and 1.00% during which a certain rainfall intensity value is exceeded. In practice, the ITU has mapped all the statistics of the earth areas and, if we set an area, an effective path length, an operating frequency and the (horizontal or vertical) polarization of the transmitted radio signal, the system availability time percentage is obtained.

Naturally, the higher the percentage of availability to be achieved, the shorter the maximum path length shall be.

By way of example, in the Sahara desert (where the rainfall frequency is very low) there is a 99.9% availability for paths longer than 30 Km, a 99.99% availability for 23.1 Km paths and a 99.999% availability for 11.3 Km paths. On the contrary, in the event of high rainfall (Cameroon), there is a 99.9% availability for 8.6 Km paths, a 99.99% availability for 2.8 Km paths and 99.999% availability for 1.3 Km paths.

The expressions set forth in the various ITU-R Recommendations are valid for all areas in the world and for all frequencies up to 40 GHz. For systems operating at frequencies higher than 40 GHz not only the rainfall intensity but even the geometric size of the raindrops is decisive.

For the current systems operating at frequencies between 50 and 100 GHz experimentations for detecting the attenuation due to precipitation are not known.

By utilizing the (surely strict) ITU expressions, the received power in a point-to-point terrestrial link at 90 GHz with 45 dB TX and RX antennas, and at a 10 dBm transmitted power, has been calculated as a function of the distance and of the distance and of the rainfall intensity (millimeters/hour). It has been observed that the maximum realizable path length greatly depends on the rainfall intensity value. In contrast, given a path length, the outage time depends on the rainfall intensity statistics in the area of use.

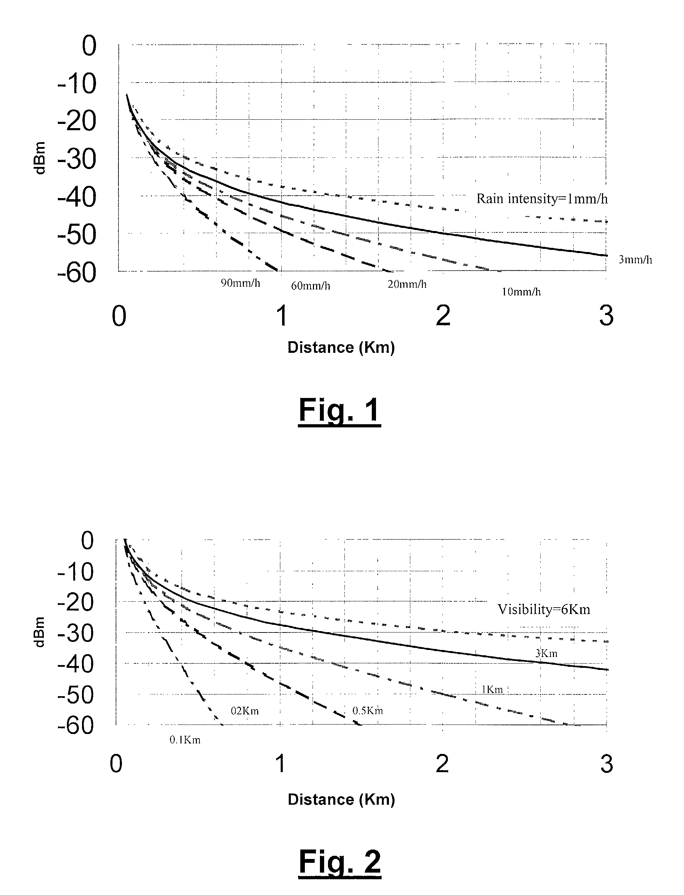

The variation of the input power in a radio receiver (90 GHz) versus path length and rainfall intensity is shown in Fig. 1. The received threshold power value (Ps) whereby the receiver goes out of order, is a function of some parameters among which the receiver noise figure, the type of modulation and the bit rate.

As to the optical transmission through the atmosphere, by utilizing the optical frequencies in the near visible band (850 nm) or SWIR (1550 nm) it is possible to limit (by means of simple lens) the transmitted beam with angles of transmission definitely lower in comparison with the radio antennas. In a hypothetical transmission through the free-space, the optical links are definitely better than radio systems. Not only in terms of transmitted band capacity, but also in terms of maximum reachable distance (both for EHF and for Infrared), the link can be realized in line-of-sight condition. In an optical troposphere link, the main outage source is the visibility. It can be stated that visibility attenuation (dB/Km) is to the optical system as the rainfall attenuation is to the radio (EHF) systems.

By utilizing the Mie coefficients to determine the attenuation due to visibility, the received power of a 193 - THz (1550 nm) troposphere link, as a function of distance and visibility (Km) has been calculated. The following parameters have been utilized: transmitted power = 10 dBm; beam angle = 3 mrad; and in reception a telescope having an effective diameter of 12 cm. In Fig. 2 there is shown the receiver input power versus distance and visibility.

The value of the received threshold power (Ps) whereby the receiver goes out of order is a function of some parameters such as the quantum limit, the type of photodetector and the bit rate. The Ps value is a product characteristic of the used optical/electrical receiver.

From Fig. 2 it can be observed that the maximum realizable path length greatly depends on the visibility value. Or, given a path length, the outage time depends on the visibility statistics of the area where the system is used.

Therefore, a telecommunication service provider, when using an optical system in a metropolitan area, in order to approach the percentage of radio availability (sold in the current systems with a frequency below 38 GHz) shall limit the maximum link distance to tenths of kilometers. In any case, the maximum values of link distance for the optical systems are such that they cannot compete with those for the radio ones.

Moreover, hardly a full optic system will be able to reach the same order of availability as a radio system, even for very short paths.

In view of the unavailability drawbacks peculiar to the radio transmission systems and through-air optical transmission systems, it is the main object of the present invention to provide a method of improving the availability, impaired by breakdowns or meteorological phenomena, of a wireless transmission system.

It is a further object of the present invention to provide a transceiver apparatus for improving the availability, caused by breakdowns or meteorological phenomena, of a wireless transmission system.

These and furter objects are achieved through a system having the features set forth in the independent claim 1 or 2, a transmitter according to claim 6 or 7, a receiver according to claim 9 or 10 and a transmission method according to claim 13 or 14. Further advantageous features of the invention are set forth in the relevant dependent claims.

The basic idea of the present invention is to provide a hybrid system able to send/receive simultaneously radio (EHF) and optical (IR) signals. The combined system can be applied to any protocol for the transmission of data from PDH, SDH, Fast Ethernet and Giga Ethernet networks to digital TV, voice, etc..

The system of the invention does not require any processing of the transmitted frame. The radio/optical switching information is derived from the power of the received signal and not from extra byte information or data intraframe.

A detailed description of the invention now follows, such a description being given by way of a mere non limiting example, to be read with reference to the attached drawing sheets, wherein:
- Fig. 1 shows a diagram establishing a relationship, for a radio receiver, between the input power and the radio link distance at various rainfall intensity values;
- Fig. 2 shows a diagram establishing a relationship, for an optical receiver, between the input power and the radio link distance at various visibility values; and
- Fig. 3 schematically shows the system in accordance with the present invention.

Referring first to Fig. 1, it is easily understood that, in view of the increasing demand for bit rates in the radio transmission, if the spectrum 50 to 100 GHz is occupied, at the same distance of the systems below 40 GHz, significant limitations as to availability will occur. If optical systems are used to satisfy the increases in the bit rate, the availability values of the current radio systems will certainly be not obtained because of visibility (see Fig. 2).

The invention is based on the underlying consideration that when fog is present it is not raining and, conversely, when it is raining there is no fog. Indeed, other atmospheric phenomena could contribute to reduce the visibility values. Among these, snow and hail could be neglected because of the infrequency of their usual occurrence.

One could think that the rain, the atmospheric phenomena interesting most of the earth with a certain frequency, could affect the availability of an optical link by reducing the visibility. Indeed, by comparing a temporal sequence of visibility data, it has been realized that the occurrence of an event of rain does not result in a visibility reduction. In other words, one may think that the two phenomena are uncorrelated.

As a matter of fact, when calculating the correlation coefficients between the two sequences of data (the visibility one and the rainfall intensity one concerning the month of August 1998 for the city of Milan, Italy), a value equal to 0.038 has been obtained.

Therefore, one may conclude that also the rain is irrelevant to the free-space propagation of a laser beam; therefore, the element which is most responsible for the reduction of visibility is the fog.

On the ground of the above considerations, in view of the increasing demand for wireless bit rates, the present invention provides for increasing the availability value or the link length by simultaneously transmitting radio (EHF) signals and optical (IR) signals.

The hybrid transmission system in accordance with the present invention can be applied to any protocol for the transmission of data, from the asynchronous (PDH) networks to the synchronous (SDH, SONET) ones, from the Fast Ethernet and Giga Ethernet networks to digital TV, Voice etc..

Advantageously, the system of the invention does not necessitate any processing of the transmitted frame. In reception there is provided the possibility of performing a Radio/Optical switching operation on the basis of a special information received. Advantageously, the Radio/Optical Switching information is derived from the received signal power and not from extra byte information or data intra-frame, even through it is anyway possible to do so.

Another advantage of the present invention is that the system does not require any type of remote information channel.

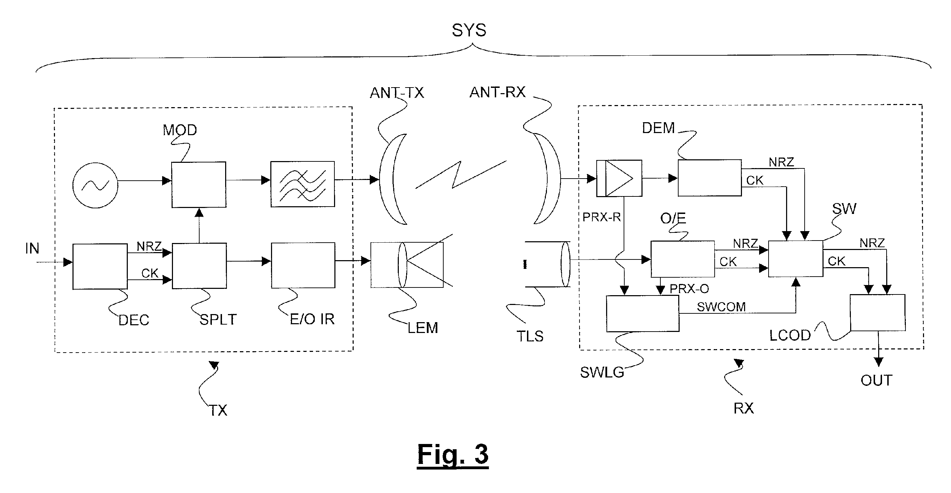

In Fig. 3 there is schematically represented the operating principle of the system SYS accordng to the invention.

The system SYS according to the invention comprises a transmitter apparatus TX and a receiver apparatus RX. Typically, the transmitter apparatus TX comprises an input interface to receive input signals IN coming, e.g., from a hard-wired line(a cable or optical fiber). The input signals IN are preferably decoded and the clock (CK) thereof is recovered through a proper decoder (DEC). In other words, the decoder DEC, on the basis of the adopted line coding, converts the input signals into NRZ signals and recovers the clock CK.

Provided downstream of the line decoder DEC is a splitter SPLT through which the decoded signals (NRZ) are simultaneously sent both to a radio modulator MOD, and afterwards to an antenna ANT-TX, and to an electrical/optical converter E/O IR, and then to a laser emitter LEM to form a laser beam.

In other words, therefore, the transmitter apparatus TX of the system according to the invention comprises a radio transmitter and a laser transmitter for transmitting through the atmosphere the same information at substantially different frequencies.

In the free space between the transmitter apparatus TX and the receiver apparatus RX there are two beams, a radio beam in the EHF range and an optical beam in the IR range. In essence, this is a frequency-diversity radio system with completely different frequencies. In fact the distance of the two transmitted frequencies is higher than three orders of magnitude. The two transmissions are synchronous, because they come from the same data.

In reception, the system SYS provides for a receive apparatus substantially comprising two different receivers, an optical receiver and a radio receiver tuned at the corresponding transmission frequencies.

The radio receiver comprises a receiver antenna ANT-RX and a device designed to detect the received radio signal power value PRX-R. Such a power value PRX-R is supplied to a device SWLG comprising appropriate changeover logic that drives a switching device SW.

The radio receiver further comprises a demodulator DEM able to demodulate the received radio signal, thus producing a demodulated signal (NRZ) and recover the clock (CK). The demodulated radio signal and the clock are fed to the switching device SW.

The optical receiver comprises a telescope TLS with lens to polarize the received light beam. Provided downstream of the telescope TLS is a receiving module O/E which converts the signal from optical into electrical, performs clock recovering and detects the transitions (3 R module, namely Regenerating-Recovering-Reshaping). The same device detects the received radio signal power value (PRX-O) and such a value is sent to the device SWLG containing the switching logic. The signal converted from optical into electrical is fed to the switching device SW along with the clock signal.

The device SWLG containing the switching logic basically processes the power values (PRX-R, PRX-O) related to the received radio and optical signals, said values being obtained through conventional techniques employed in the radio systems and in the optical fiber receiver modules.

The transmitted power, the gains of the transmitting/receiving antennas, as well as the link distance are designed in such a way that, in the absence of atmosphere disturbances (rain) and under visibility condition, the received power level at the inputs of the respective receivers have a fair margin towards a threshold received power (Ps).

Under these conditions, the installation designer, on the ground of the statistics of the area (preponderance of rain or visibility) may decide whether to have the average output data coming from the optical or radio system. This choice determines another field of exploration since, on the ground of the statistics of the area, it is possible to significantly reduce the number of annual switchings.

As the atmospheric conditions (rain or fog) are varied, the input signal decreases in a different manner at the two receivers. The switching logic compares the received power values with the threshold power values (Ps) stored in a register and possibly takes the decision to perform the switching.

In order to process the received power values and compare them with the threshold power values (Ps) it is sufficient to use a conventional microcontroller.

When one of the two receivers enters the threshold (i.e. a received power value close to or below the threshold value is detected), the switching logic takes the decision to switch the source of the output data. In practice, the channel which is worse is eliminated.

The switching times that can be realized are however shorter than 1 ms. In principle data could become lost because of this fraction of time. Should the short clock loss cause time dilations downstream of the network, it is possible to use known elastic storage techniques to avoid microdesynchronizations in the short lack-of-data period due to the switching.

At this point it will be understood that the hybrid system is not only a countermeasure against the freaks of the weather but it is an optimal protection against possible faults in a wireless telecommunication system.

It is apparent that several modifications, adaptations, variants and change of parts by others which are functionally equivalent, can be imparted to the wireless telecommunication system of the invention without departing in any way from the scope defined by the following claims.

## Claims

1. Wireless communication system protected against outage, said system comprising:
a transmitter comprising a transmitter apparatus designed to transmit radio signals; and
a receiver comprising a receiver apparatus designed to receive the transmitted radio signals,
said system being **characterized in that**:
said transmitter comprises an additional transmitter apparatus, said additional transmitter apparatus being designed to transmit optical signals through the air; and
said receiver comprises an additional receiver apparatus being designed to receive the optical signals transmitted through the air.

2. Wireless communication system protected against outage, said system comprising:
a transmitter comprising a transmitter apparatus designed to transmit optical signals through the air; and
a receiver comprising a receiver apparatus designed to receive the through-air transmitted optical signals,
said system being **characterized in that**:
said transmitter comprises an additional transmitter apparatus, said additional transmitter apparatus being designed to transmit radio signals; and
said receiver comprises an additional receiver apparatus, said additional receiver apparatus being designed to receive radio signals.

3. Communication system according to claim 1 or 2, **characterized in that** said transmitter further comprises a splitter and said receiver further comprises a switching device.

4. Communication system according to claim 3, **characterized by** further comprising:
a device designed to detect the received radio signal power value; and
a device designed to detect the received optical signal power value,
said switching device comprising changeover logic responsive to said power values of the radio signal and of the optical signal.

5. Communication system according to claim 1, **characterized in that** said receiver apparatus designed to receive radio signals and said receiver apparatus designed to receive through-air transmitted optical signals are tuned at the transmission frequency of said transmitter apparatus designed to transmit radio signals and of said transmitter apparatus designed to transmit optical signals through the air, respectively.

6. Transmitter for wireless transmitting signals to a corresponding receiver, said transmitter comprising a transmitter apparatus designed to transmit radio signals, **characterized by** further comprising a laser transmitter apparatus designed to transmit optical signals through the air.

7. Transmitter for wireless transmitting signals to a corresponding receiver, said transmitter comprising a transmitter apparatus designed to transmit optical signals through the air, **characterized by** further comprising a radio transmitter apparatus designed to transmit radio signals.

8. Transmitter according to claim 6 or 7, **characterized by** further comprising a splitter for feeding an identical decoded signal to a modulator of the radio transmitter apparatus and to an electrical/optical converter of the laser transmitter apparatus.

9. Receiver for receiving wireless-transmitted signals from a corresponding transmitter, said receiver comprising a receiver apparatus designed to receive radio signals, **characterized by** further comprising a laser receiver apparatus designed to receive optical signals through the air.

10. Receiver for receiving wireless-transmitted signals from a corresponding transmitter, said receiver comprising a receiver apparatus designed to receive through-air transmitted optical signals, **characterized by** further comprising a radio receiver apparatus designed to receive radio signals.

11. Receiver according to claim 9 or 10, **characterized by** further comprising a switching device to select one of said received optical and radio signals.

12. Receiver according to claim 11, **characterized by** further comprising:
a device designed to detect the received radio signal power value; and
a device designed to detect the received optical signal power value, and in that said switching device comprises changeover logical responsive to the power level of the received optical signal and radio signal.

13. Method for wireless, transmitting/receiving signals in a manner protected against outage, said method comprising the steps of:
in transmission, receiving a signal to be transmitted, sending said signal to be transmitted to a radio modulator and providing such a signal to an antenna for transmitting radio signals;
in reception, receiving said radio signals through a receiving antenna,
**characterized by** comprising the steps of:
in transmission, providing a copy of said signal to be transmitted also to an electrical/optical converter and to a laser emitter to form a laser beam and transmitting such a signal through said laser beam,
in reception, receiving said signal transmitted through the laser beam and selecting one of said radio signal and said optical signal.

14. Method for wireless transmitting/receiving signals in a manner protected against outage, said method comprising the steps of:
in transmission, receiving a signal to be transmitted, sending said signal to be transmitted to an electrical/optical converter and to a laser emitter to form a laser beam and transmitting said signal by means of said laser beam,
in reception, receiving said signal transmitted by means of the laser beam,
**characterized by** comprising the steps of:
in transmission, providing a copy of said signal to be transmitted to a radio modulator and providing such a signal to an antenna for the transmission of radio signals,
in reception, receiving said radio signals through a receiving antenna and selecting one of said radio signal and said optical signal.

15. Method according to claim 13 or 14, **characterized in that** said step of selecting one of said radio signal and said optical signal comprises the step of detecting the power level both of the received radio signal and of the received optical signal.

16. Method according to claim 15, **characterized in that** said step of selecting one of said radio signal and said optical signal comprises the step of outputting the radio signal from the receiver unless its power level at the receiver is basically corresponding to a threshold power level (Ps).

17. Method according to claim 15, **characterized in that** said step of selecting one of said radio signal and said optical signal comprises the step of outputting the optical signal from the receiver unless its power level at the receiver is basically corresponding to a threshold power level (Ps).
